# EUROPEAN PATENT SPECIFICATION

(11) **EP 1 219 370 B1**
(45) Date of publication and mention of the grant of the patent: **04.05.2005**
(21) Application number: 01127500.5
(22) Date of filing: 28.11.2001
(51) Int. Cl.: B23B 27/16

(54) **Cutting tool and throw-away insert therefor**
Schneidwerkzeug und Schneideinsatz
Outil de coupe et plaquette de coupe

(30) Priority: 30.11.2000 JP 2000365619
(43) Date of publication of application: 03.07.2002
(73) Proprietor: NGK Spark Plug Co., Ltd., Nagoya-shi, Aichi 467-8525 (JP)
(72) Inventor: Inayama, Takashi, Mizuho-ku, Nagoya-shi, Aichi 467-8525 (JP)
(74) Representative: Grünecker, Kinkeldey, Stockmair & Schwanhäusser Anwaltssozietät

(56) References cited:
- DE-A- 4 416 651
- DE-B- 1 246 360
- DE-B- 1 281 779

## Description

### BACKGROUND OF THE INVENTION

### 1. FIELD OF THE INVENTION

The present invention relates to a cutting tool, and a throw-away insert for the cutting tool. The throw-away insert is clamped securely to substantially a peak end of a holder of the cutting tool with a clamp screw.

### 2. DESCRIPTION OF THE RELATED ART

In a category of automatic lathes such as a cam-type automatic lathe, an NC (numerical control) automatic lathe and the like, there is included a machining equipment which is provided with a plurality of turrets. The turrets of the machining equipment mount cutting tools. The cutting tools are disposed radially when viewed in a direction along a rotational axis of a chucked workpiece (cut material).

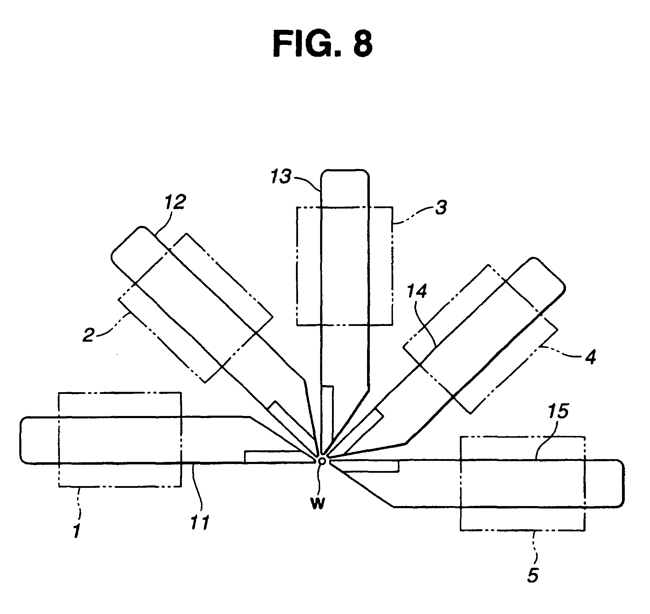

More specifically, as is seen in Fig. 8, the machining equipment is provided with five turrets 1 to 5 which are disposed around a rotational axis of a workpiece W. When viewed in the direction along the rotational axis of the workpiece W, the five turrets 1 to 5 are disposed radially. Each of the turrets 1 to 5 clamps one of respective cutting tools 11 to 15. Each of the cutting tools 11 to 15 has a cutting blade whose peak end is distant from the workpiece W in a standby condition, namely, when a machining operation is not under way. On the other hand, when the machining operation is under way, the cutting tool (singular or plural in number) having the cutting blade for the machining operation is (are) conveyed in a direction perpendicular to the rotational axis of the workpiece W and toward a center of the rotational axis of the workpiece W. The workpiece W is cut with the thus conveyed cutting tool(s) in a predetermined manner. The cutting tool(s) is (are) so controlled as to return to the original point after the machining operation. With this, the cutting tool {singular or plural in number (plural cutting tools are conveyed simultaneously)} is (are) conveyed one after another for the required machining operation.

Of the above automatic lathes, the one for machining a shaft part (small diameter) such as those used for watch, clock, camera, instrument (meter), computer and the like uses a cutting tool that is of a type whose holder is brazed with an insert (formed with the cutting blade).

Use of the cutting tool having the above "brazed insert" instead of a "throw-away insert" is probably attributable to causes described in the following three paragraphs:

The cutting tools mounted on the turrets of the above automatic lathe are disposed radially on a flat surface which is perpendicular to the rotational axis of the workpiece W. Thereby, as is seen in Fig. 8, the smaller the workpiece W is in external diameter, the closer the peak ends (of the cutting tools) are to each other, both in the standby condition and when the machining operation is under way.

In terms of the cutting tool having the throw-away insert: The workpiece W having the external diameter not more than 15.0 mm is ordinarily not usable. This is attributable to an interference of the cutting tools (collision with each other) each of which has the throw-away insert clamped with a clamp screw (The interference is caused even though the cutting tool has a comparatively compact peak end.).

In terms of the cutting tool having the brazed insert: Contrary to the cutting tool having the throw-away insert, the cutting tool having the brazed insert can be subjected to a grinding (at the peak end of the cutting tool, including the brazed insert) so as to prevent the interference (collision), without causing failures such as decrease in locking strength of the brazed insert. With this, the cutting tool having the brazed insert is usable.

The brazed insert is, however, high in cost, involving increase in machining cost. Moreover, the cutting tool having the brazed insert is formed through the grinding, which is responsible for decrease in precision (and/or accuracy) of centering (in other words, adjusting position of the cutting blade) during replacement of the cutting tool having the brazed insert. This involves further preparation steps.

In view of the above feature of the cutting tool having the brazed insert, use of the cutting tool having the throw-away insert is preferred even in such applications as machining the shaft parts (small diameter) by means of the automatic lathe.
From DE 1 246 360 a cutting tool is known having a clamp holder with an aperture for receiving a throw-away insert. The insert is fixed to the clamp holder by means of a clamping bolt pressing the insert against boundary walls of the aperture in order to securely hold the insert with respect to three cutting pressures, i.e. a main cutting pressure, a feed pressure, and a back pressure. Thereby, a breakage of the insert due to a suddenly occurring load is prevented. The clamp holder comprises a rod-like shaft and a head which is thicker than the shaft. The insert is situated at the head and arranged across to or signficantly inclined with respect to a longitudinal direction of the damp holder.

### BRIEF SUMMARY OF THE INVENTION

It is the object of the present invention to provide a cutting tool having a throw-away insert, for machining a shaft part defining a small external diameter.
According to the present invention, the object is solved by a cutting tool having the features of independent claim 1.

More specifically, the cutting tool is plural in number each of which is mounted on one of a plurality of turrets disposed radially when viewed in a direction along a rotational axis of a chucked workpiece. The cutting tool (having the throw-away insert) is the one used for an automatic lathe such as a cam-type automatic lathe, an NC automatic lathe and the like.

There can be provided a cutting tool disposed on a turret. The cutting tool comprises: a holder having a peak end, and a throw-away insert clamped to the peak end of the holder with a clamp screw. The holder comprises: a bottom face and a peak end face defining a corner of the holder. The corner of the holder forms a chamfered face. The throw-away insert comprises: a bottom face and a relief face defining a corner of the throw-away insert. The corner of the throw-away insert forms a chamfered face.

There can be provided an automatic lathe for machining a round-rod workpiece which is chucked on the automatic lathe and has an external diameter of not more than 5.0 mm before a machining operation. The automatic lathe comprises: a plurality of turrets so disposed on the automatic lathe as to form a radiation when the plurality of the turrets are viewed in a first direction along a rotational axis of the workpiece; and a plurality of cutting tools disposed on the plurality of the turrets in such a manner as to define a radial angular interval of 45° between two of the adjacent cutting tools. Each of the cutting tools comprises: a holder having a peak end; and a throw-away insert clamped to the peak end of the holder with a clamp screw. The holder comprises a bottom face and a peak end face defining a corner of the holder. The corner of the holder forms a chamfered face so as to prevent the cutting tools adjacent to each other from causing an interference with each other when the cutting tools are at least one of in a standby position and in the machining operation. The throw-away insert comprises a bottom face and a relief face defining a corner of the throw-away insert. The corner of the throw-away insert forms a chamfered face so as to prevent the cutting tools adjacent to each other from causing the interference with each other when the cutting tools are at least one of in the standby position and in the machining operation.

Hereinafter described is TiCN coating as well as surface roughness of throw-away inserts.

According to the illustrated embodiment of the present invention, parent material (or base material) of the throw-away insert is extremely smooth having a surface roughness Ra (by JIS = Japanese Industrial Standard) not more than 0.3 µm.

Herein, Ra is technically referred to as "center-line mean roughness." The Ra is also referred to as "arithmetical mean roughness" which is one of surface roughnesses defined by JIS B 0601 (1994).

The surface of the parent material of the throw-away insert is coated with a thin TiCN layer not more than 2 µm in thickness. Thereby, the surface (TiCN coat) of a blade end of the throw-away insert is small in irregularity. The thus formed blade end of the throw-away insert grows without causing great distortion, and therefore, is welded stably. As a result, even a free cutting steel is cut accurately and/or precisely (dimensional tolerance: ± 0.01 mm), to thereby machine workpieces in large number.

Herein, the TiCN coating layer (not more than 2 µm) according to the illustrated embodiment of the present invention is thinner than conventional coating layer (for example, 3 µm to 5 µm). In spite of the thinness of the TiCN coating layer according to the illustrated embodiment of the present invention, the cutting tool has a longevity. This longevity is attributable to the above stable welding of the blade end of the throw-away insert, and this stable welding is maintained preferably.

The parent material of the throw-away insert according to the illustrated embodiment of the present invention is made of various materials such as hard metal (or cemented carbide), ceramic, cermet (an acronym for ceramic metal - from Dictionary of Science and Technology issued by Academic Press), high speed steel and the like. The hard metal is, however, preferably the one whose raw material is made of ultra-fine-particle not more than 1 µm in grain size (Hereinafter such hard metal is referred to as "ultra-fine-particle hard metal."). As compared with an ordinary hard metal, the ultra-fine-particle hard metal according to the illustrated embodiment of the present invention is high in toughness and hardness, thereby featuring good blade standing (in other words, good machinability forming an acute blade end of the throw-away insert). Moreover, the ultra-fine-particle hard metal is excellent in wear resistance as well as failure resistance.

The center-line mean roughness Ra (not more than 0.3 µm) according to the illustrated embodiment of the present invention is not a must for the entire surface of the parent material of the throw-away insert. In other words, "not more than 0.3 µm" should be applied to at least the blade end of the throw-away insert.

Moreover, according to the illustrated embodiment of the present invention, the TiCN coating layer may be single or multiple. To form the TiCN coating layer having thickness of not more than 2 µm, shorter (than conventional method) vapor deposition time is preferred.

The above sums up description of the TiCN coating as well as the surface roughness.

The other objects and features of the present invention will become understood from the following description with reference to the accompanying drawings.

### BRIEF DESCRIPTION OF THE SEVERAL VIEWS OF THE DRAWINGS

Fig. 1 shows a plurality of cutting tools 101 to 105 each of which is mounted on one of respective turrets 1 to 5 of an automatic lathe, viewed in a direction along a rotational axis of a workpiece W, according to an embodiment of the present invention;
Fig. 2 is an enlarged view of a peak end of a holder 111 in Fig. 1;
Fig. 3 is an enlarged view showing an area in the vicinity of the workpiece W in Fig. 2 in a standby condition;
Fig. 4 shows a peak end of the cutting tool 101 viewed in the direction along the rotational axis of the workpiece W in Fig. 3;
Fig. 5 shows the peak end of the cutting tool 101 viewed from a rake face 153 of the holder 111;
Fig. 6 shows a chip pocket 121 at the peak end of the cutting tool 101 viewed from a rod side face 113 of the holder 111;
Fig. 7 shows the peak end of the cutting tool 101 viewed from a peak end face 138 of the holder 111; and
Fig. 8 shows a plurality of cutting tools 11 to 15 each of which is mounted on one of respective turrets 1 to 5 of the automatic lathe, viewed in the direction along the rotational axis of the workpiece W, according to a related art.

### DETAILED DESCRIPTION OF THE EMBODIMENT

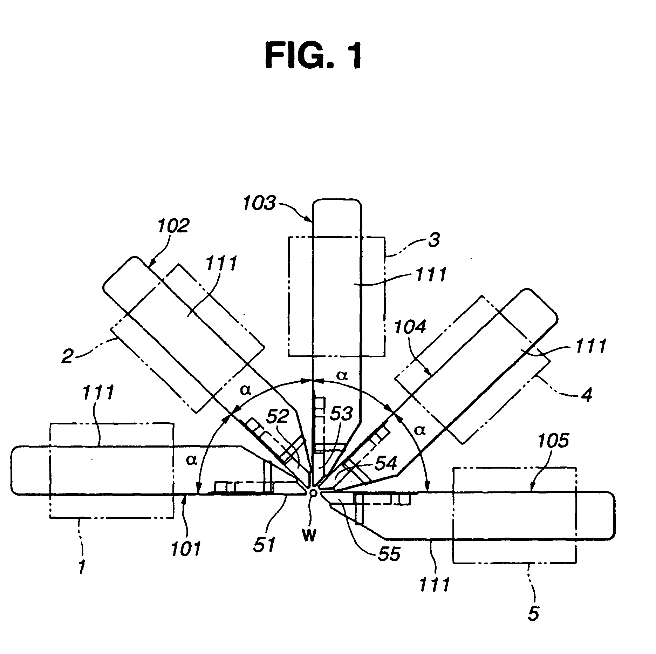

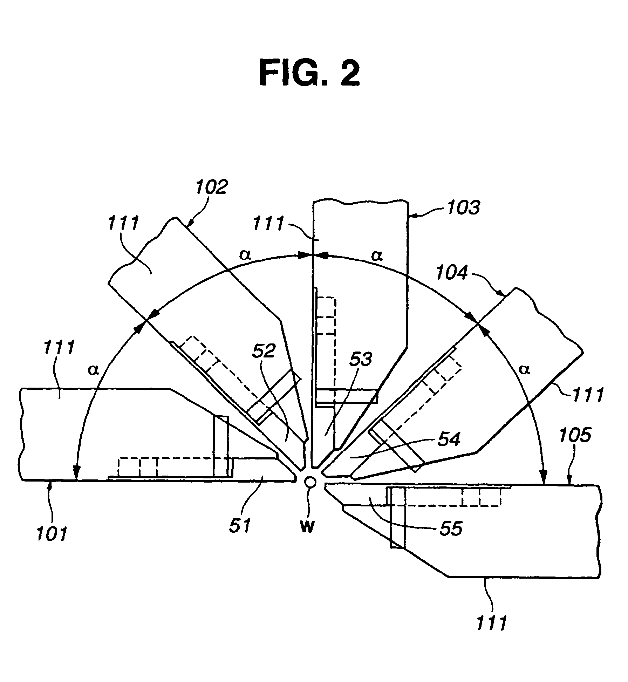

As is seen in Fig. 1 to Fig. 7, there is provided a cutting tool, according to an embodiment of the present invention. Fig. 1 to Fig. 4 show the cutting tool(s) viewed in a direction along a rotational axis of a workpiece W which is chucked in a condition that the cutting tool(s) is (are) mounted on a plurality of turrets of an automatic lathe. Each of Fig. 1 to Fig. 4 shows a standby condition before a machining (cutting) operation. Each numeral denoted by 1 to 5 is a turret. The turrets 1 to 5 are disposed radially at regular angular intervals of 45° (angular interval α), when viewed in the direction along the rotational axis of the workpiece W which is chucked on the automatic lathe (not shown). As is seen in Fig. 1, the turrets 1 to 5 are schematically denoted by two-dot chain lines. Each of the turrets 1 to 5 mounts one of the respective cutting tools 101 to 105, according to the embodiment. Thus the cutting tools 101 to 105 are also disposed radially at regular angular intervals of 45° (angular interval α), when viewed in the direction along the rotational axis of the workpiece W.

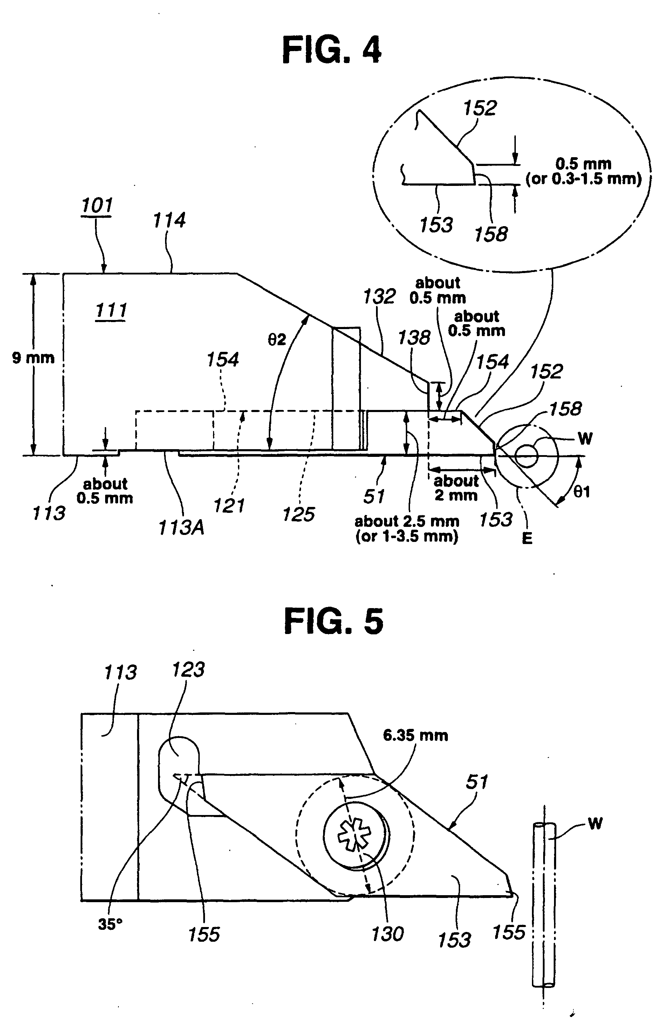

According to the embodiment, each of the cutting tools 101 to 105 mounted on one of the respective turrets 1 to 5 has a holder 111 (same). Each of the adjacent cutting tools 101 to 105 clamps one of respective throw-away inserts 51 to 55 (each of which has a rake face 153 and a bottom face 154 opposite to the rake face 153, as is seen in Fig. 4). The cutting tools 101 to 105 are disposed radially, when viewed in the direction along the rotational axis of the workpiece W {hereinafter also referred to as "(in) front view"}. Moreover, the cutting tools 101 to 105 adjacent to each other are disposed in a condition that the rake face 153 (of one of the throw-away inserts 51 to 55) faces the bottom face 154 (of the adjacent another of the throw-away inserts 51 to 55).

Herein, the cutting tools 101 to 105 are basically common to each other in terms of configuration and constitution, except for configuration of a cutting blade of the throw-away inserts 51 to 55 clamped. Therefore, hereinafter described in detail is the cutting tool 101 only, as is seen in Fig. 4.

More specifically, the holder 111 constituting the cutting tool 101 is shaped substantially into a rod extending straightly, and has a cross section substantially shaped into a square defining four sides each of which is 9 mm (for example) long. The holder 111 defines a rod side face 113 which is positioned on a side defining the rake face 153 of the throw-away insert 51. The rod side face 113 defines a flat near-to-end face 113A which is parallel to the rod side face 113, and is slightly lower in level (about 0.5 mm upward in Fig. 4) than the rod side face 113. The near-to-end face 113A defines a chip pocket 121 dented.

The throw-away insert 51 has a constant thickness in a range from 1 mm to 3.5 mm (about 2.5 mm according to the embodiment). As is seen in Fig. 5, the throw-away insert 51 is flat, and is shaped substantially into a rhombus defining an imaginary inscribing circle (6.35 mm in diameter) of the rake face 153. Moreover, the throw-away insert 51 has two noses 155 each of which defines an imaginary apex angle of 35° of the rhombus. One (left in Fig. 5) of the two noses 155 is receivable in the chip pocket 121. The chip pocket 121 has a bottom (left in Fig. 4) which is formed with a cutout 123 (Fig. 5) for relieving the one (left in Fig. 5) of the two noses 155.

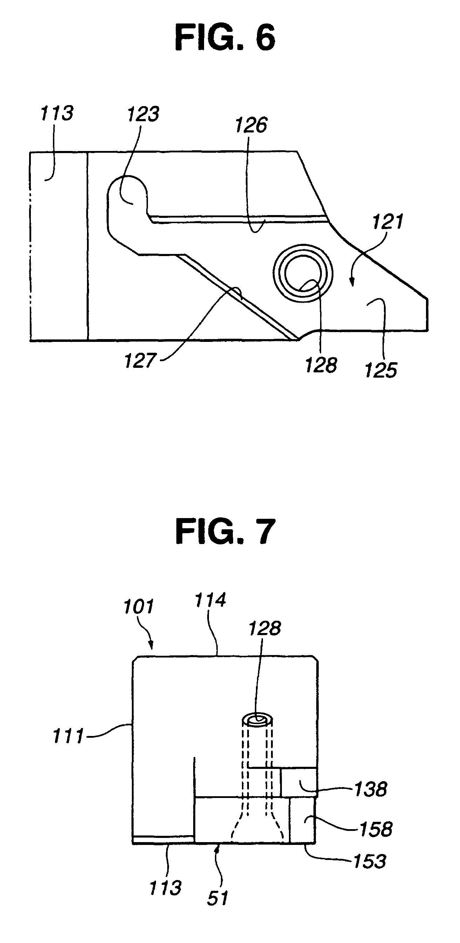

As is seen in Fig. 6, the chip pocket 121 is constituted of a insert seated face 125 and a pair of a first wall face 126 and a second wall face 127. The insert seated face 125 is flat, and the first wall face 126 and the second wall face 127 restrict the throw-away insert 51. As is seen in Fig. 5, Fig. 6 and Fig. 7, the insert seated face 125 defines a screw hole 128 (through hole) for a clamp screw 130.

As is seen in Fig. 4, the holder 111 has a bottom face 114 and a chamfered face 132 (to be described in detail afterwards) adjacent to the bottom face 114. The screw hole 128 extends to the chamfered face 132, and opens in substantially a center area of the chamfered face 132 in a longitudinal direction of the holder 111.

Thereby, the throw-away insert 51 (flat, rhombus, and defining a hole) is . seated on the insert seated face 125 of the chip pocket 121, with the bottom face 154 abutting on the insert seated face 125 while two peripheral faces (restricted faces) abutting respectively on the first wall face 126 and the second wall face 127. The clamp screw 130 is a countersunk head screw {for example, M2.5 by JIS (= Japanese Industrial Standard), and 5 mm in length, according to the embodiment}, and is screwed into the screw hole 128 for fixation which is defined substantially in the center of the rake face 153.

Herein, the clamp screw 130 has a screw head which is so countersunk as to sink (in Fig. 4, upward) more than the rake face 153 in level. Moreover, the rake face 153 of the throw-away insert 51 is so designed as to sink (in Fig. 4, upward) more than the rod side face 113 of the holder 111 in level. Preferably, the rake face 153 sinks from the rod side face 113 in a range from 0.05 mm to 0.3 mm. According to the embodiment, the rake face 153 sinks from the rod side face 113 by 0.1 mm. With the above configuration, the cutting tool 101 is smoothly mounted (inserted) on and removed (pulled) from the turret 1.

As is seen in Fig. 4 and Fig. 5, the thus clamped throw-away insert 51 has a peak end {including the nose 155 (cutting blade)} extending from the insert seated face 125, and forms a protrusion from a peak end face 138 (of the holder 111), which protrusion is about 1 to 1.5 times thickness of the throw-away insert 51. According to the embodiment, the protrusion is, for example, about 2 mm.

Moreover, there is formed a chamfered face 152 at a corner which is defined between a relief face 158 and the bottom face 154 of the throw-away insert 51. As is seen in Fig. 4 (in the front view), the chamfered face 152 is substantially a plane (flat face) which is cut straight, leaving 0.3 mm to 1.5 mm (in a direction of thickness from the rake face 153, namely, in a direction perpendicular to the rake face 153) for the relief face 158. According to the embodiment, about 0.5 mm is left for the relief face 158. The chamfered face 152 is designed to form a first chamfer angle θ1 of 45° relative to the rake face 153 in the front view. The angle θ1 is, however, allowed to be in a range from 35° to 45°.

Moreover, according to the embodiment, the bottom face 154 (of the throw-away insert 51) extending from the insert seated face 125 defines a small protrusion (about 0.5 mm) from the peak end face 138 of the holder 111.

The throw-away insert 51 according to the embodiment has the two noses 155 each of which is the cutting blade defining the imaginary apex angle of 35°. The cutting blades of the two noses 155 form a point symmetry in plan view, as is seen in Fig. 5.

Moreover, the throw-away insert 51 is coated with TiCN on a surface thereof in the following sequential steps (The surface of the throw-away insert 51, however, excludes a wall of the screw hole 128.):
1. Prepare the parent material of the throw-away insert 51, which parent material is an ultra-fine-particle hard metal.
2. Polish the relief face 158 and the rake face 153 including the blend end of the cutting blade, so as to finish the relief face 158 and the rake face 153 with the center-line mean roughness Ra not more than 0.3 µm. Herein, ridge of the blend end of the cutting blade is extremely acute.
3. Coat the surface of the throw-away insert 51 with TiCN having a layer of thickness not more than 2 µm (set value 1.5 µm).

According to the illustrated embodiment of the present invention, the parent material of the throw-away insert 51 has the center-line mean roughness Ra not more than 0.3 µm, which roughness is substantially equivalent to that of mirror finished surface. Moreover, according to the illustrated embodiment of the present invention, the TiCN coating is as thin as not more than 2 µm. In other words, the coating layer formed in the vicinity of the blend end (ridge of cutting blade) of the throw-away insert 51 is extremely smooth. The extreme smoothness and the thinness of the coating layer contribute to reduction in surface roughness during formation of the coating layer.

The above is summarized as follows: The blade end of the throw-away insert 51 is formed small (thin) and stable. Therefore, cutting the free cutting steel with the thus formed blade end of the throw-away insert 51 does not decrease precision and/or accuracy of machining the workpiece W requiring dimensional tolerance of ± 0.01 mm. The surface roughness of the parent material of the throw-away insert 51 after forming the TiCN coating layer is checked by removing the TiCN coating layer with solvent.

Moreover, the holder 111 has a peak end formed with the chamfered face 132. As is seen in Fig. 4, the chamfered face 132 is continuous with the bottom face 114, and is discontinuous with the insert seated face 125 leaving an allowance (about 0.5 mm according to the embodiment, allowance between the chamfered face 132 and the insert seated face 125) for the peak end face 138. The chamfered face 132 is substantially a plane (flat face) which is cut straight in the front view.

According to the embodiment, there is formed a second chamfer angle θ2 which is designed 30°, as is seen in Fig. 4. In other words, in the front view, the chamfered face 132 and the near-to-end face 113A (of the holder 111) forms 30°. Moreover, the chamfered face 132 and the rake face 153 (of the throw-away insert 51) forms 30°. The second chamfer angle θ2 is preferably in a range from 30° to 45°. In addition, the second chamfer angle 62 is preferably smaller than the first chamfer angle θ1. A peak end (opposite to the screw head) of the clamp screw 130 can protrude to some extent when the screw hole 128 is open on the chamfered face 132 at the peak end of the holder 111. Therefore, with the second chamfer angle θ2 smaller than the first chamfer angle θ1, thread area can be effectively secured.

According to the embodiment, substantially a peak end of the cutting tool 101 in overall view forms a great chamfer. More specifically, as is seen in Fig. 4 (in the front view), the relief face 158 (at the peak end of the throw-away insert 51) and the bottom face 114 (of the holder 111) form the great chamfer striding therebetween.

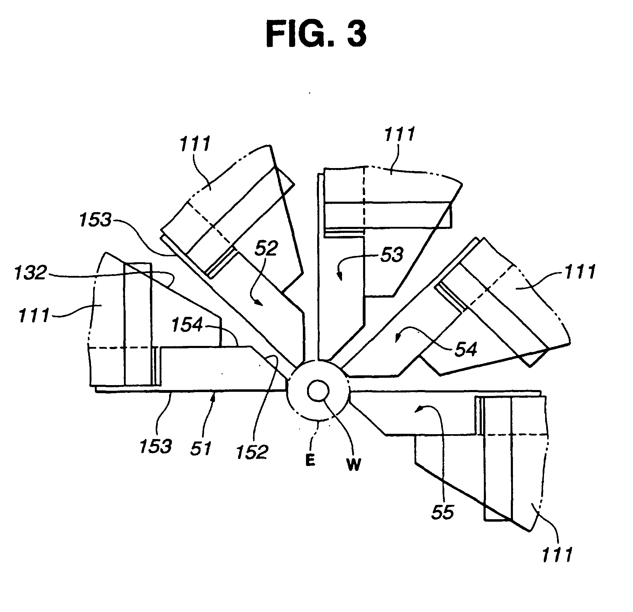

Each of the cutting tools 101 to 105 thus constituted is used, for example, for machining the workpiece W of substantially a round rod whose material has an external diameter of 1 mm. As is seen in Fig. 1 to Fig. 4, each of the cutting tools 101 to 105 is mounted on one of the respective turrets 1 to 5 disposed radially. As is seen in Fig. 3 (the front view), in the standby condition (or position) before machining, the peak end of the nose 155 (cutting blade) of each of the cutting tools 101 to 105 is disposed on an imaginary circumference E having a radius of 2 mm around the rotational axis of the workpiece W.

Each of the throw-away inserts 51 to 55 of one of the respective cutting tools 101 to 105 is formed with the chamfered face 152, while each of the holders 111 of one of the respective cutting tools 101 to 105 is formed with the chamfered face 132. Thereby, the cutting tools 101 to 105 are free from any interference or collision with each other. The freedom from the interference or collision is secured even in the following situations: i) Standby condition (or position), as is seen in Fig. 3. ii) When any one of the cutting tools 101 to 105 is conveyed in a direction perpendicular to the rotational axis of the workpiece W and toward a center of the rotational axis of the workpiece W, to thereby start machining the workpiece W. iii) When a plurality of the cutting tools 101 to 105 are simultaneously conveyed in the direction perpendicular to the rotational axis of the workpiece W and toward a center of the rotational axis of the workpiece W, to thereby start machining the workpiece W (in this case, however, simultaneously conveyed are the cutting tools that are not adjacent to each other).

Therefore, the cutting tools 101 to 105 according to the embodiment are mounted on the turrets which are disposed on a cam-type automatic lathe or an NC automatic lathe. The turrets are so disposed as to form a radiation when viewed in the direction along the rotational axis of the workpiece W. The thus mounted cutting tools 101 to 105 effectively carry out machining operation of the small shaft parts, without causing any interference between the adjacent cutting tools 101 to 105. Included in the small shaft parts is the one having the external diameter of 1 mm.

Described in the above embodiment is the five cutting tools mounted, at regular angular intervals of 45° in the front view, on a plurality of the turrets which are disposed on the automatic lathe. Herein, the five cutting tools are subjected to the machining operation for machining the workpiece having an external diameter of 1 mm.

The cutting tool according to the illustrated embodiment of the present invention has the following minimum requirement:

The chamfer at the corner of the throw-away insert (of the cutting tool) and the chamfer at the corner of the holder (of the cutting tool) should have appropriate angle and area, so that the adjacent cutting tools can prevent any interference in accordance with the radial angular intervals between the cutting tools and with the external diameter of the workpiece.

The above minimum requirement should be satisfied both when the cutting tools disposed on the turrets are in the standby condition and when the machining operation is under way.

The turrets of the above automatic lathe are disposed in such a manner that the cutting tools mounted on the turrets ordinarily have radial angular intervals of 45° each other. In this case, of the conventional cutting tools, the one having the throw-away insert clamped with the clamp screw is likely to cause interference even if such cutting tool is small, in the case that the workpiece before the machining operation is not more than 15 mm in external diameter.

In other words, the above paragraph is summarized as follows:

Conditions:
i) The turrets are preferably disposed in such a manner that the cutting tools mounted on the turrets have radial angular intervals of 45°.
ii) The workpiece before the machining operation is not more than 15 mm in external diameter.
iii) The cutting tools are mounted on the turrets in the standby condition before machining operation or in the machining operation.
In the above three conditions i) to iii), each of the cutting tools preferably has a chamfered face at a corner of the throw-away insert and a chamfered face at a comer of the holder, so as to prevent any interference (or collision) which may be caused between the adjacent cutting tools. Such cutting tools are generally usable and especially preferable.

The interference between the adjacent cutting tools is prevented (or is less likely to occur) with the following two measures taken together:
i) Decrease the first chamfer angle θ1 (of the chamfered face 152) and the second chamfer angle θ2 (of the chamfered face 132).
ii) Enlarge width (cutting area) of the chamfered face 132 and the chamfered face 152 in the front view.

The two measures described above, however, are likely to decrease strength of the cutting tool. Therefore, the above decrease (of the first chamfer angle θ1 and the second chamfer angle θ2) and enlargement (of the width of the chamfered face 132 and the chamfered face 152) should preferably be restricted to such an extent that the cutting tool is not decreased in strength.

Moreover, each of the throw-away inserts mounted on the holder should define a cutting blade which has proper configuration in accordance with required machining operation (such as grooving, turning external diameter, and machining back side of flange).

The throw-away insert in plan view is not limited to the rhombus as the one seen in Fig. 5. Such rhombus (in other words, an "elongated" throw-away insert when viewed on rake face) according to the embodiment is, however, preferable for the following reason:

To allow the chamfer of the holder to secure as many threads of the screw hole (for the clamp screw for fixing the throw-away insert) as possible, the screw hole is preferably disposed as backward (in other words, toward bottom end of the holder, or leftward in Fig. 5) as possible from the peak end face of the holder.
As is seen in Fig. 7, the rod side face 113 and the bottom face 114 of the holder 111 according to the illustrated embodiment extend in parallel to each other between two opposite outside faces, and the center of the screw (through) hole 128 is situated to one of the two opposite outside faces (to the lower face as viewed in Fig. 6, and to right face as viewed in Fig. 7). The peak end face 138 of the holder 111 is formed in a region between the position of the center of the screw hole 128 and the right outside face of the holder 111 as viewed in Fig. 7. As is seen in Fig. 6, the flat near-to-end face 113A of the holder 111 extends continuously around the chip pocket 121 from a first end located on one side of the through hole 128 (on the upper side as viewed in Fig. 6) to a second end located on the other side of the through hole 128 (on the lower side as viewed in Fig. 6), so that the cutout 123 is shaped like an impasse.

Although the present invention has been described above by reference to one embodiment, the present invention is not limited to the one embodiment described above. Modifications and variations of the embodiment described above will occur those skilled in the art, in light of the above teachings.

The scope of the present invention is defined with reference to the following claims.

## Claims

1. A cutting tool (101, 102, 103, 104, 105) adapted to be arranged radially around a workpiece (W) with other tools for cutting, the cutting tool (101, 102, 103, 104, 105) comprising:
a holder (111) which extends in a longitudinal direction to a peak end terminating at a peak end face (138) and which includes a bottom face (114) and a rod side face (113) opposite to the bottom face (114), the bottom face (114) and rod side face (113) both extending in the longitudinal direction of the holder (111), the peak end of the holder (111) including a chamfered face (132) formed between the peak end face (138) of the holder (111) and the bottom face (114) of the holder (111); and
a throw-away insert (51, 52, 53, 54, 55) fastened to the peak end of the holder (111) with a clamp screw (130), the throw-away insert (51, 52, 53, 54, 55) extending in the longitudinal direction of the holder (111) and terminating at a relief face (158), the throw-away insert (51, 52, 53, 54, 55) including a bottom face (154) and a rake face (153) opposite to the bottom face (154) of the throw-away insert (51, 52, 53, 54, 55), the bottom face (154) and the rake face (153) of the throw-away insert (51, 52, 53, 54, 55) extending in the longitudinal direction of the holder (111), the throw-away insert (51, 52, 53, 54, 55) further including a chamfered face (152) formed between the relief face (158) and the bottom face (154) of the throw-away insert (51, 52, 53, 54, 55), the rake face (153) of the throw-away insert (51, 52, 53, 54, 55) being sunk below the rod side face (113) of the holder (111) toward the bottom face (114) of the holder (111).

2. The cutting tool (101, 102, 103, 104, 105) as claimed in claim 1, in which the rake face (153) of the throw-away insert (51, 52, 53, 54, 55) is sunk below the rod side face (113) of the holder (111) toward the bottom face (114) of the holder (111), to a depth in the range from 0.05 mm to 0.3 mm.

3. The cutting tool (101, 102, 103, 104, 105) as claimed in claim 2, in which the rake face (153) of the throw-away insert (51, 52, 53, 54, 55) and the rod side face (113) of the holder (111) are substantially flat and parallel to each other.

4. The cutting tool (101, 102, 103, 104, 105) as claimed in claim 1, wherein the clamp screw (130) includes a countersunk head which is depressed below the rake face (153) of the throw-away insert (51, 52, 53, 54, 55).

5. The cutting tool (101, 102, 103, 104, 105) as claimed in claim 1, wherein the holder (111) is formed with a chip pocket (121) receiving the throw-away insert (51, 52, 53, 54, 55), and including a depressed face (125) abutting on the bottom face (154) of the throwaway insert (51, 52, 53, 54, 55), and the chip pocket (121) is depressed to such a depth that the rake face (153) of the throw-away insert (51, 52, 53, 54, 55) is sunk below the rod side face (113) of the holder (111).

6. The cutting tool (101, 102, 103, 104, 105) as claimed in claim 5, wherein the depressed face (125) of the chip pocket (121) is substantially flat and extends to an end in the longitudinal direction of the holder (111), and the peak end face (138) of the holder (111) extends upright from the end of the flat depressed face (125) of the chip pocket (121).

7. The cutting tool (101, 102, 103, 104, 105) as claimed in claim 6, wherein the holder (111) comprises a flat near-to-end face (113A) opposite to the bottom face (114) of the holder (111), and the flat depressed face (125) of the chip pocket (121) is depressed below the flat near-to-end face (113A), and the flat near-to-end face (113A) extends continuously around the chip pocket (121) from a first end on one side of a through hole (128), to a second end located on the other side of the through hole (128).

8. The cutting tool (101, 102, 103, 104, 105) as claimed in claim 1, in which the holder (111) is formed with a through hole (128) opening in the chamfered face (132) of the holder (111), and the throwaway insert (51, 52, 53, 54, 55) is fastened to the holder (111) with the clamp screw (130) inserted in the through hole (128).

9. The cutting tool (101, 102, 103, 104, 105) as claimed in claim 8, wherein the clamp screw (130) includes an end projecting from the chamfered face (132) of the holder (111), out of the through hole (128) of the holder (111).

10. The cutting tool (101, 102, 103, 104, 105) as claimed in claim 8, wherein the through hole (128) is opened in a centre area of the chamfered face (132) of the holder (111).

11. The cutting tool (101, 102, 103, 104, 105) as claimed in claim 8, wherein the holder (111) comprises opposing first and second outside faces between which the bottom face (114) of the holder (111) extends, a centre of the through hole (128) is situated to the first outside face, away from a middle between the first and second outside faces of the holder (111), and the peak end face (138) of the holder (111) extends only in a region between the centre of the through hole (128) and the first outside face of the holder (111).

12. The cutting tool (101, 102, 103, 104, 105) as claimed in claim 1, wherein the relief face (158) of the throw-away insert (51, 52, 53, 54, 55) is in a range of 0.3 mm to 1.5 mm in height as measured in a direction perpendicular to the longitudinal direction of the holder (111).

13. The cutting tool (101, 102, 103, 104, 105) as claimed in claim 1, wherein the peak end face (138) of the holder (111) is about 0.5 mm in height, and the bottom face (154) of the throw-away insert (51, 52, 53, 54, 55) projects about 0.5 mm from the peak end face (138) of the holder (111).

## Patentansprüche

1. Schneidwerkzeug (101, 102, 103, 104, 105), das so eingerichtet ist, dass es mit anderen Werkzeugen zum Schneiden radial um ein Werkstück (W) herum angeordnet wird, wobei das Schneidwerkzeug (101, 102, 103, 104, 105) umfasst:
einen Halter (111), der sich in einer Längsrichtung zu einem Spitzen-Ende hin erstreckt, das an einer Spitzen-Endfläche (138) endet, und der eine untere Fläche (114) sowie eine Stangen-Seitenfläche (113) gegenüber der unteren Fläche (114) enthält, wobei sich die untere Fläche (114) und die Stangen-Seitenfläche (113) beide in der Längsrichtung des Halters (111) erstrecken und das Spitzen-Ende des Halters (111) eine abgefaste Fläche (132) enthält, die zwischen der Spitzen-Endfläche (138) des Halters (111) und der unteren Fläche (114) des Halters (111) ausgebildet ist; und
einen Wegwerfeinsatz (51, 52, 53, 54, 55), der an dem Spitzen-Ende des Halters (111) mit einer Klemmschraube (130) befestigt ist, wobei sich der Wegwerfeinsatz (51, 52, 53, 54, 55) in der Längsrichtung des Halters (111) erstreckt und an einer Abhebefläche (158) endet, der Wegwerfeinsatz (51, 52, 53, 54, 55) eine untere Fläche (154) und eine Spanfläche (153) gegenüber der unteren Fläche (154) des Wegwerfeinsatzes (51, 52, 53, 54, 55) enthält, sich die untere Fläche (154) und die Spanfläche (153) des Wegwerfeinsatzes (51, 52, 53, 54, 55) in der Längsrichtung des Halters (111) erstrecken, der Wegwerfeinsatz (51, 52, 53, 54, 55) des Weiteren eine abgefaste Fläche (152) enthält, die zwischen der Abhebefläche (158) und der unteren Fläche (154) des Wegwerfeinsatzes (51, 52, 53, 54, 55) ausgebildet ist, und die Spanfläche (153) des Wegwerfeinsatzes (51, 52, 53, 54, 55) unter die Stangen-Seitenfläche (113) des Halters (111) in Richtung der unteren Fläche (114) des Halters (111) eingesenkt ist.

2. Schneidwerkzeug (101, 102, 103, 104, 105) nach Anspruch 1, wobei Spanfläche (153) des Wegwerfeinsatzes (51, 52, 53, 54, 55) unter die Stangen-Seitenfläche (113) des Halters (111) in Richtung der unteren Fläche (114) des Halters (111) auf eine Tiefe im Bereich zwischen 0,05 mm und 0,3 mm eingesenkt ist.

3. Schneidwerkzeug (101, 102, 103, 104, 105) nach Anspruch 2, wobei die Spanfläche (153) des Wegwerfeinsatzes (51, 52, 53, 54, 55) und die Stangen-Seitenfläche (113) des Halters (111) im Wesentlichen plan und parallel zueinander sind.

4. Schneidwerkzeug (101, 102, 103, 104, 105) nach Anspruch 1, wobei die Klemmschraube (130) einen Senkkopf enthält, der unter die Spanfläche (153) des Wegwerfeinsatzes (51, 52, 53, 54, 55) vertieft ist.

5. Schneidwerkzeug (101, 102, 103, 104, 105) nach Anspruch 1, wobei der Halter (111) mit einem Spanhohlraum (121) versehen ist, der den Wegwerfeinsatz (51, 52, 53, 54, 55) aufnimmt und eine vertiefte Fläche (125) enthält, die an der unteren Fläche (154) des Wegwerfeinsatzes (51, 52, 53, 54, 55) anliegt, und der Spanhohlraum soweit vertieft ist, dass die Spanfläche (153) des Wegwerfeinsatzes (51, 52, 53, 54, 55) unter die Stangen-Seitenfläche (113) des Halters (111) eingesenkt ist.

6. Schneidwerkzeug (101, 102, 103, 104, 105) nach Anspruch 5, wobei die vertiefte Fläche (125) des Spanhohlraums (121) im Wesentlichen plan ist und sich zu einem Ende in der Längsrichtung des Halters (111) erstreckt und die Spitzen-Endfläche (138) des Halters (111) sich von dem Ende der planen vertieften Fläche (125) des Spanhohlraums (121) aufrechtstehend erstreckt.

7. Schneidwerkzeug (101, 102, 103, 104, 105) nach Anspruch 6, wobei der Halter (111) eine endnahe Fläche (113A) gegenüber der unteren Fläche (114) des Halters (111) umfasst und die plane vertiefte Fläche (125) des Spanhohlraums (121) unter die plane endnahe Fläche (113A) vertieft ist und sich die plane endnahe Fläche (113A) von einem ersten Ende an einer Seite eines Durchgangslochs (128) zu einem zweiten Ende, das sich an der anderen Seite des Durchgangslochs (128) befindet, durchgehend um den Spanhohlraum (121) herum erstreckt.

8. Schneidwerkzeug (101, 102, 103, 104, 105) nach Anspruch 1, wobei der Halter (111) mit einem Durchgangsloch (128) versehen ist, dass sich in der abgefasten Fläche (132) des Halters (111) öffnet, und der Wegwerfeinsatz (51, 52, 53, 54, 55) mit der Klemmschraube (130), die in das Durchgangsloch (128) eingeführt ist, an dem Halter (111) befestigt ist.

9. Schneidwerkzeug (101, 102, 103, 104, 105) nach Anspruch 8, wobei die Klemmschraube (130) ein Ende enthält, das von der abgefasten Fläche (132) des Halters (111) über das Durchgangsloch (128) des Halters (111) vorsteht.

10. Schneidwerkzeug (101, 102, 103, 104, 105) nach Anspruch 8, wobei das Durchgangsloch (128) in einem Mittelbereich der abgefasten Fläche (132) des Halters (111) geöffnet ist.

11. Schneidwerkzeug (101, 102, 103, 104, 105) nach Anspruch 8, wobei der Halter (111) einander gegenüberliegende erste und zweite Außenflächen umfasst, zwischen denen sich die untere Fläche (114) des Halters (111) erstreckt, ein Mittelpunkt des Durchgangslochs (128) zu der ersten Außenfläche hin von einer Mitte zwischen der ersten und der zweiten Außenfläche des Halters (111 ) entfernt liegt und sich die Spitzen-Endfläche (138) des Halters (111) nur in einem Bereich zwischen dem Mittelpunkt des Durchgangslochs (128) und der ersten Außenfläche des Halters (111) erstreckt.

12. Schneidwerkzeug (101, 102, 103, 104, 105) nach Anspruch 1, wobei die Abhebefläche (158) des Wegwerfeinsatzes (51, 52, 53, 54, 55), gemessen in einer Richtung senkrecht zur Längsrichtung des Halters (111), in einem Bereich zwischen 0,3 mm und 1,5 mm hoch ist.

13. Schneidwerkzeug (101, 102, 103, 104, 105) nach Anspruch 1, wobei die Spitzen-Endfläche (138) des Halters (111) ungefähr 0,5 mm hoch ist und die untere Fläche (154) des Wegwerfeinsatzes (51, 52, 53, 54, 55) ungefähr 0,5 mm von der Spitzen-Endfläche (138) des Halters (111) vorsteht.

## Revendications

1. Outil de coupe (101, 102, 103, 104, 105) apte à être agencé radialement autour d'une pièce (W) avec d'autres outils pour la coupe, l'outil de coupe (101, 102, 103, 104, 105) comprenant:
un support (111) qui s'étend dans une direction longitudinale à une extrémité de pointe se terminant à une face d'extrémité de pointe (138) et qui comprend une face inférieure (114) et une face côté tige (113) opposée à la face inférieure (114), la face inférieure (114) et la face côté tige (113) s'étendant toutes les deux dans la direction longitudinale du support (111), l'extrémité de pointe du support (111) comprenant une face chanfreinée (132) formée entre la face d'extrémité de pointe (138) du support (111) et la face inférieure (114) du support (111); et
un insert jetable (51, 52, 53, 54, 55) fixé à l'extrémité de pointe du support (111) avec une. vis de serrage (130), l'insert jetable (51, 52, 53, 54, 55) s'étendant dans la direction longitudinale du support (111) et se terminant à une face de dégagement (158), l'insert jetable (51, 52, 53, 54, 55) comprenant une face inférieure (154) et une face dépouillée (153) opposée à la face inférieure (154) de l'insert jetable (51, 52, 53, 54, 55), la face inférieure (154) et la face dépouillée (153) de l'insert jetable (51, 52, 53, 54, 55) s'étendant dans la direction longitudinale du support (111), l'insert jetable (51, 52, 53, 54, 55) comprenant en outre une face chanfreinée (152) formée entre la face de dégagement (158) et la face inférieure (154) de l'insert jetable (51, 52, 53, 54, 55), la face dépouillée (153) de l'insert jetable (51, 52, 53, 54, 55) étant creusée en dessous de la face côté tige (113) du support (111) vers la face inférieure (114) du support (111).

2. Outil de coupe (101, 102, 103, 104, 105) selon la revendication 1, où la face dépouillée (153) de l'insert jetable (51, 52, 53, 54, 55) est creusé en dessous de la face côté tige (113) du support (111) vers la face inférieure (114) du support (111), à une profondeur dans la plage de 0,05 mm à 0,3 mm.

3. Outil de coupe (101, 102, 103, 104, 105) selon la revendication 2, où la face dépouillée (153) de l'insert jetable (51, 52, 53, 54, 55) et la face côté tige (113) du support (111) sont sensiblement plates et parallèles l'une à l'autre.

4. Outil de coupe (101, 102, 103, 104, 105) selon la revendication 1, où la vis de serrage (130) comprend une tête fraisée qui est creusée en dessous de la face dépouillée (153) de l'insert jetable (51, 52, 53, 54, 55).

5. Outil de coupe (101, 102, 103, 104, 105) selon la revendication 1, où le support (111) présente une poche de copeaux (121) recevant l'insert jetable (51, 52, 53, 54, 55) et comprenant une face creusée (125) butant contre la face inférieure (154) de l'insert jetable (51, 52, 53, 54, 55), et la poche de copeaux (121) est creusée à une profondeur telle que la face dépouillée (153) de l'insert jetable (51, 52, 53, 54, 55) soit creusée en dessous de la face côté tige (113) du support (111).

6. Outil de coupe (101, 102, 103, 104, 105) selon la revendication 5, où la face creusée (125) de la poche de copeaux (121) est sensiblement plate et s'étend à une extrémité dans la direction longitudinale du support (111), et la face d'extrémité de pointe (138) du support (111) est debout depuis l'extrémité de la face creusée plate (125) de la poche de copeaux (121).

7. Outil de coupe (101, 102, 103, 104, 105) selon la revendication 6, où le support (111) comprend une face plate près de l'extrémité (113A) opposée à la face inférieure (114) du support (111), et la face plate creusée (125) de la poche de copeaux (121) est creusée en dessous de la face plate près de l'extrémité (113A), et la face plate près de l'extrémité (113A) s'étend continuellement autour de la poche de copeaux (121) à partir d'une première extrémité sur un côté d'un trou traversant (128) à une seconde extrémité située de l'autre côté du trou traversant (128).

8. Outil de coupe (101, 102, 103, 104, 105) selon la revendication 1, où le support (111) présente un trou traversant (128) s'ouvrant dans la face chanfreinée (132) du support (111), et l'insert jetable (51, 52, 53, 54, 55) est fixé au support (111) avec une vis de serrage (130) insérée dans le trou traversant (128).

9. Outil de coupe (101, 102, 103, 104, 105) selon la revendication 8, où la vis de serrage (130) comprend une extrémité faisant saillie de la face chanfreinée (132) du support (111), hors du trou traversant (128) du support (111).

10. Outil de coupe (101, 102, 103, 104, 105) selon la revendication 8, où le trou traversant (128) est ouvert dans une zone centrale de la face chanfreinée (132) du support (111).

11. Outil de coupe (101, 102, 103, 104, 105) selon la revendication 8, où le support (111) comprend des première et seconde faces extérieures opposées entre lesquelles la face inférieure (114) du support (111) s'étend, un centre du trou traversant (128) se situe sur la première face extérieure, au loin d'un milieu entre les première et seconde faces extérieures du support (111), et la face d'extrémité de pointe (138) du support (111) s'étend seulement dans une région entre le centre du trou traversant (128) et la première face extérieure du support (111).

12. Outil de coupe (101, 102, 103, 104, 105) selon la revendication 1, où la face de dégagement (158) de l'insert jetable (51, 52, 53, 54, 55) se situe dans une plage de 0,3 mm à 1,5 mm en hauteur, mesurée dans une direction perpendiculaire à la direction longitudinale du support (111).

13. Outil de coupe (101, 102, 103, 104, 105) selon la revendication 1, où la face d'extrémité de pointe (138) du support (111) est d'environ 0,5 mm en hauteur, et la face inférieure (154) de l'insert jetable (51, 52, 53, 54, 55) dépasse d'environ 0,5 mm de la face d'extrémité de pointe (138) du support (111).
